# EUROPEAN PATENT APPLICATION

(11) **EP 3 683 615 A1**
(43) Date of publication of application: **22.07.2020**
(21) Application number: 19465503.1
(22) Date of filing: 18.01.2019
(51) Int. Cl.: G02B 27/01

(54) **A HEAD-UP DISPLAY DEVICE FOR A VEHICLE AND VEHICLE**

(71) Applicant: Continental Automotive GmbH, 30165 Hannover (DE)
(72) Inventor: Coroi, Andrei, 335900 Simeria (RO)

(57) **Abstract**

The invention relates to a head-up display device for vehicles, particularly for motor vehicles, for a vehicle comprising:
an image output device configured to output an image; and
an optical system that projects the image outputted from the image output device to a windshield of a vehicle in order to display a virtual image within the vehicle. Further the invention relates to a vehicle.

## Description

The invention relates to a head-up display device for vehicles, particularly for motor vehicles, comprising:
an image output device configured to output an image; and
an optical system that projects the image outputted from the image output device to a windshield of the vehicle in order to display a virtual image within the vehicle, wherein the optical system includes:
   a first reflection unit receiving the image outputted from the image output device and reflecting the received image, the first reflection unit having a first optical path, along which the image reflected by the first reflection unit travels; and
   a second reflection unit receiving the image reflected by the first reflection unit and projecting the received image to the windshield by reflecting the received image, the second reflection unit having a second optical path, along which the image reflected by the second reflection unit travels;
   a gearing system, wherein the gearing system comprises an electric motor and a worm gear which is rotated by the electric motor. The invention relates further to a vehicle with such a head-up display device.

Such head-up display devices are already in use for displaying information, particularly an image of the surrounding area, such that it can be perceived by the driver. A head-up display device comprises usually a big aspherical mirror and also a small mirror. The image is created by a LCD display and is projected on the small mirror, reflected on the bigger mirror and then projected on the windshield of the car so that it can be seen by the driver. While the car is moving, the dashboard of the car is influenced by vibrations, which are received from the engine and from the road influence. The parts from the head-up display device at a certain point will start to move and vibrate and will enter in a resonance state. This vibration movement can cause collision between parts and this will generate unwanted noise. Furthermore, the image is unsteady.

The trend of the market is to have a bigger virtual image which means a bigger size of the main projection mirror. When the main projection mirror is very big, this part will start to vibrate at a lower vibration frequency, so the chances for the head-up display device to pass the customer vibration requirements are becoming a lot smaller.

US 2016139410 A1 provides a positioning module for a head-up display device, including: a positioning motor which is operated by an operating signal from a control unit; a lead screw which is connected with the positioning motor and rotated by an operation of the positioning motor; a movable link which is in threaded engagement with the lead screw and moved in an axial direction of the lead screw by the rotation of the lead screw; and a connecting member which connects a mirror unit, which is provided to be rotatable about a rotating shaft, with the movable link, and rotates the mirror unit according to the movement of the movable link, in which connection portions between the connecting member and the movable link are in surface contact with each other, thereby improving durability and positioning performance.

US 2008218870 A1 provides a head-up-display comprising an image generating unit and at least one mirror which is arranged in the beam path downstream from the image generating unit. The mirror is embodied in such a manner that it can be deformed by adjusting elements in order to facilitate the control thereof.

The present invention is made in view of the above-mentioned disadvantages. Thus, it is an object of the present invention to overcome at least one of the above-mentioned disadvantages.

This object is solved by a head-up display device for a vehicle having the features of claim 1 and a vehicle having the features of claim 16.

Advantageous embodiments are specified in the subsequent dependent claims. The dependent claims list further advantageous measures which can be combined with one another, as desired, in order to achieve further advantages.

The object is inventively achieved by means of a head-up display device for a vehicle comprising:
an image output device configured to output an image; and
an optical system that projects the image outputted from the image output device to a windshield of the vehicle in order to display a virtual image within the vehicle, wherein:
   the optical system includes:
   a first reflection unit receiving the image outputted from the image output device and reflecting the received image, the first reflection unit having a first optical path, along which the image reflected by the first reflection unit travels; and
   a second reflection unit receiving the image reflected by the first reflection unit and projecting the received image to the windshield by reflecting the received image, the second reflection unit having a second optical path, along which the image reflected by the second reflection unit travels;
   a gearing system, wherein the gearing system comprises an electric motor and a worm gear which is rotated by the electric motor,
   wherein the first reflection unit is connected to the gearing system for rotating the first reflection unit within a predetermined rotation angle in order to change the optical path of the reflection reflected by the first reflection unit relative to the second reflection unit, by connecting the first reflection unit to a guide arm and the guide arm to the gearing system for adjusting the rotational position of the first reflection unit, and wherein
   the second reflection unit is fixed in the head-up display device.

According to the invention, it was recognized that, the second reflection unit is easily influenced by the vibrations received by the car from the road, because of its high size and its high mass. According to the invention it was further recognized that the vibration issue/problem can be avoided by fixing the second reflection unit with the big mirror. If the big mirror is fixed an adjustment of the virtual image because of the height of the drivers still has to be done. This is now solved by the rotation of the first reflection unit. Therefore, the invention provided a gearing system, which comprises an electric motor and a worm gear which is rotated by the electric motor, and the first reflection unit, which is connected to a guide arm, and the guide arm is connected to the gearing system, for adjusting the rotational position of the first reflection unit.

This solves the vibration issue in the available space of the head-up display device.

When rotating the first reflection unit with the small mirror and fix the second reflection unit, with the aspherical big mirror, last one will not be so sensitive to the vibration shocks, and so the overall resonance frequency of the head-up display device will change. The head-up display device will have bigger chances to fulfil the customer requirements, and have a better overall behavior in tough conditions.

According to a particularly preferred embodiment, the first reflection unit comprises a mirror disposed in a frame or a back cover. Preferably the first reflection unit comprises a small plane mirror, which is glued on the back cover. The small mirror may be made from glass.

In another preferred embodiment a first and a second arm is, preferably in a horizontal direction, connected to the frame or the back cover. The position of the two arms are in coincidence with the rotation axis of the small mirror which can be simulated/calculated by the optical specialist.

Preferably the head-up display device comprises a first bearing and a second bearing. In a preferred embodiment the first bearing is a loose bearing and the second bearing is a fixed bearing or viceversa.

It is preferred, that the first arm is fixed to the first bearing and the second arm is fixed to the second bearing. The first bearing, which is arranged next to the gearing system may be a loose bearing, whereas the other second bearing may be a fixed bearing.

In another further preferred embodiment, the guide arm is connected to a bearing arm and wherein the bearing arm is fixed in the first bearing and in the second bearing.

In an alternative embodiment, the guide arm itself is fixed in the first bearing and the second bearing. The guide arm can be easily inserted into the bearings. It is not necessary to provide a separate bearing arm.

The position of the fixed and loose bearing is depending on the vibration behaviour and depending on the customer environment fixation points, because the chosen of which bearing should be fixed or loose can influence the tolerance position of the small mirror.

In another further preferred embodiment, the gearing system is located next to the first bearing or the second bearing. By this the rotation of the first reflection unit can easily carried out by the gearing system.

In an alternative embodiment, the gearing system is arranged underneath the first reflection unit in the lower middle position. By this the gearing system is better fixed and the vibrations can be better absorbed.

In another further preferred embodiment, the worm gear comprises a worm shaft and the guide arm meshes with the worm shaft. So, it is not necessary to provide a separate worm wheel.

In an alternative embodiment, the gearing system comprises a worm shaft and a worm wheel, wherein the worm wheel meshes with the worm shaft, and the worm wheel is in connection with the guide arm.

In another further preferred embodiment, the gearing system comprises a motor holder and the guide arm is fixed in the motor holder. The motor holder may be mounted on the worm shaft from the electric motor. By this, the rotation of the first reflection unit can easily carried out by the gearing system and the guide arm.

In another further preferred embodiment, the electric motor is controlled by a mini printed circuit board. Preferably the mini printed circuit board is connected by a flex cable to a main printed circuit board. This ensures a simple control of the electric motor.

In a preferred embodiment the worm gear is selected as a function of the distance to the electric motor. If the motor is too close to the first reflection unit, the electric motor needs a worm gear which has very small steps in order to have good control on the adjusting of the virtual projected image. If the electric motor is at a bigger distance from the small plane mirror of the first reflection unit, than the gearing system should have a worm shaft with bigger steps and the length of the worm shaft should be big enough so that the small plane mirror of the first reflection unit can rotate as is needed. The position of the electric is according to the steps of adjusting the height of outputted image.

In a preferred embodiment the worm gear is realised in the form of a plastic worm gear.

According to a further aspect of the present invention a vehicle with a head-up display device according to one of the described features is provided.

Further features, properties and advantages of the present invention are found in the following description of exemplary embodiments with respect to the appended figures, of which:
FIG 1: shows a schematically drawing of the head-up display device,
FIG 2: shows a first embodiment according to the invention,
FIG 3: shows the first embodiment in action,
FIG 4: shows a side view of the first embodiment according to the invention,
FIG 5: shows a second embodiment according to the invention,
FIG 6: shows a third embodiment according to the invention.

Although the invention has been illustrated and described in detail with reference to the preferred exemplary embodiment, the invention is not limited to the examples disclosed and other variations can be derived therefrom by the person skilled in the art without departing from the protective scope of the invention.

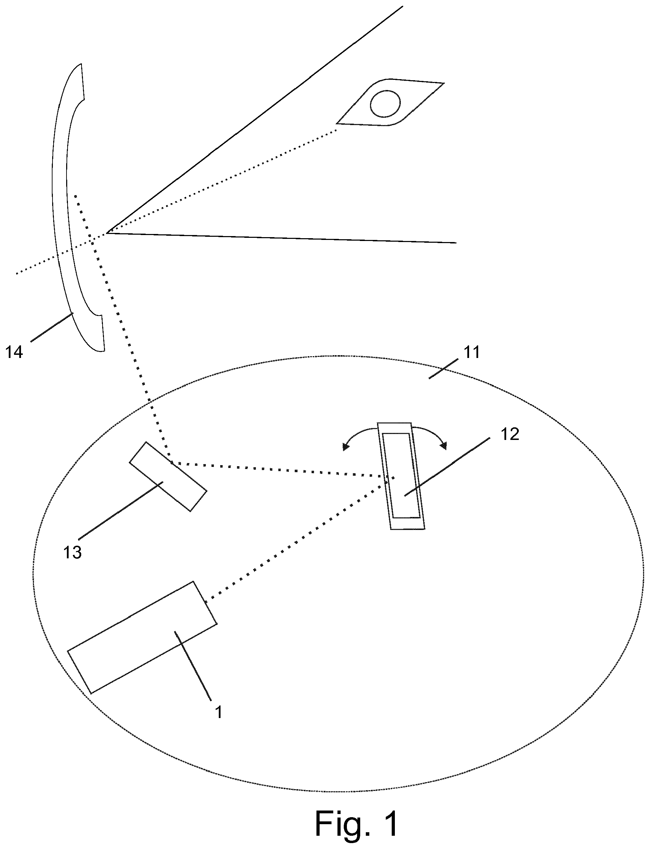

FIG 1 shows a first embodiment of the invention. The head-up display device 11 is mounted in an instrumental panel. The head-up display device 11 may comprises a case. The head-up display device 11 comprises an image output device 1, which produces and outputs an image. Further the head-up device 11 comprises an optical system that projects the image outputted from the image output device 1 to a windshield 14 of a vehicle in order to display a virtual image within the vehicle.

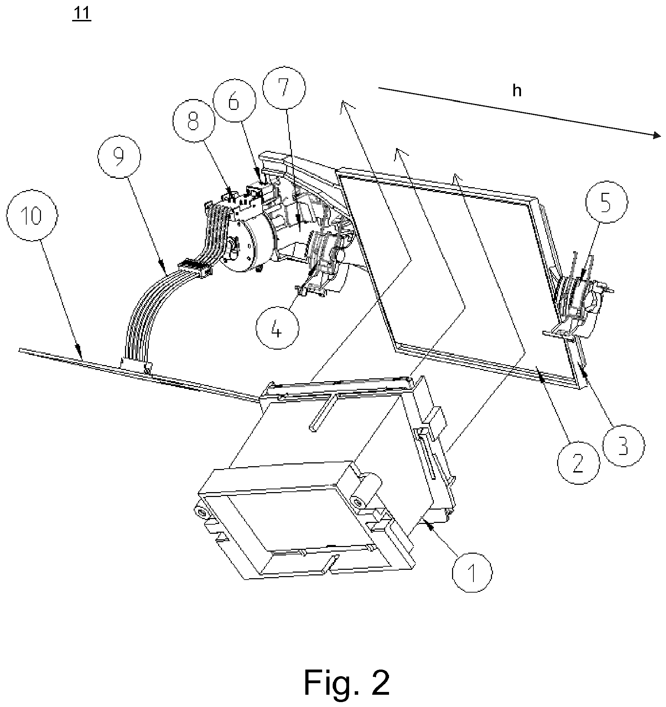

The optical system comprises a first reflection unit 12. The first reflection unit 12 is receiving the image outputted from the image output device 1 and reflecting the received image to a second reflexion unit 13. The first reflection unit 12 comprises a small plane mirror 2 (FIG 2). The mirror 2 (FIG 2) of the first reflection unit 12 may be made from glass. The second reflection unit 13 is receiving the image reflected from the first reflection unit 12 and projecting the image to a windshield 14 of the vehicle. The second reflection unit 13 is therefore constituted in such a way, that the image outputted from the first reflection unit 12 is projected on the windshield 14 and it is seen by the driver in the driver field of view perceived as being displayed on the street. Therefore, the second reflection unit 13 incorporates an aspherical mirror. The mirror of the second reflection unit 13 is bigger than the mirror 2 (FIG 2) of the first reflection unit 12.

The optical system and the image output device 1 may be integrated in the case. The image output device 1 may comprise a projector and a display panel.

The first reflection unit 12 has a gearing system that rotates the first reflection unit 12 within a predetermined rotation angle in order to change the optical path of the reflection reflected by the first reflection unit 12 relative to the second reflection unit 13. In other words, the angle of the first reflection unit 12 is adjusted by the gearing system. This makes it possible to adjust the position of the image projected on the windshield 14 as to match the field of view of the driver.

Furthermore, the gearing system can be mechanically restricted and prevent shaking of the first reflection unit 12.

The windshield 14 is a reflected surface, which faces the passenger compartment for reflecting light. The reflective surface curves so that the curved part projects toward an exterior of the passenger compartment. The windshield surface may have a curvature that is not uniform and varies at different positions of the head up display device.

FIG 2 shows a first embodiment of the first reflection unit 12 (FIG 1) in detail. The gearing system comprises an electric motor 7 and a worm shaft which is rotated by the electric motor 7. The small mirror 2 of the first reflection unit 12 (FIG 1) is glued on a back cover 3. The back cover 3 is fixed to a side, preferably left arm in a horizontal direction h of the back cover 3 and a side, preferably right arm in the horizontal direction h of the back cover 3. These arms are fixed to a loose bearing 4 as a first bearing and to a fixed bearing 5 as a second bearing. The loose bearing 4 and the fixed bearing 5 are formed in the centre of the back cover 3. The bearing arms of the back cover 3 are arranged on the rotation axis of the small mirror. Preferably, the gearing system is located next to one of the bearings.

The first reflection unit 12 (FIG 1) is connected to a guide arm. The guide arm is connected in one end to a bearing arm as a rotation axis, wherein the bearing arm is fixed in the loose bearing 4 and the fixed bearing 5.

Here, the bearing arm can be easily inserted into the bearings. Furthermore, such a loose-fixed bearing system has no axial play and the expansion of the guide arm is uncritical. This makes it possible to adjust the first reflection unit 12 (FIG 1) by rotating the guide arm. That changes the position of the first reflection unit 12 (FIG 1) in order to adjust the optical path of the first reflection unit 12 (FIG 1) relative to the second reflection unit 13 so that the optical path of the second reflection unit 13 (FIG 1) relative to the windshield 14 (FIG 1) is adjusted.

The gearing system comprises an electric motor 7 and a worm shaft which is rotated by the electric motor 7 and a worm wheel which meshes with the worm shaft. The electric motor 7, the worm shaft and worm wheel are integrated in a motor holder 6.

The other end of the guide arm is connected either with the worm gear or the motor holder 6, especially fixed in the motor holder 6. The gearing system rotates the guide arm, therefore adjusting the rotational position of the first reflection unit 12.

The electric motor 7 is controlled by a mini printed circuit board 8 which is connected by a flex cable 9 to a main printed circuit board 10.

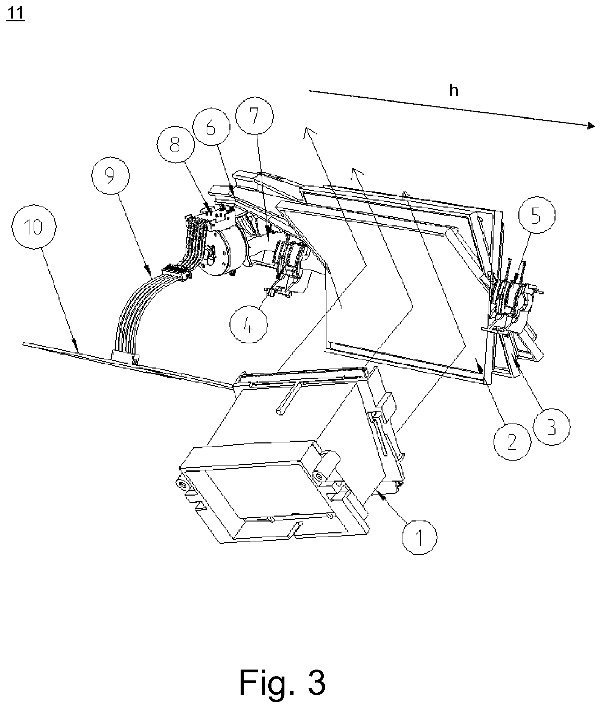

FIG 3 shows the first reflection unit 12 (FIG 1) and the gearing system in action.

Here the first reflection unit 12 (FIG 1) is rotated in three different positions by the gearing system and the guide arm. The first reflection unit 12 (FIG 1) reflects the image being outputted from the image output device 1, so as to transmit same to the second reflection unit 13 (FIG 1) . By the rotation the image on the windshield 14 (FIG 1) can be adjusted to suit each customer.

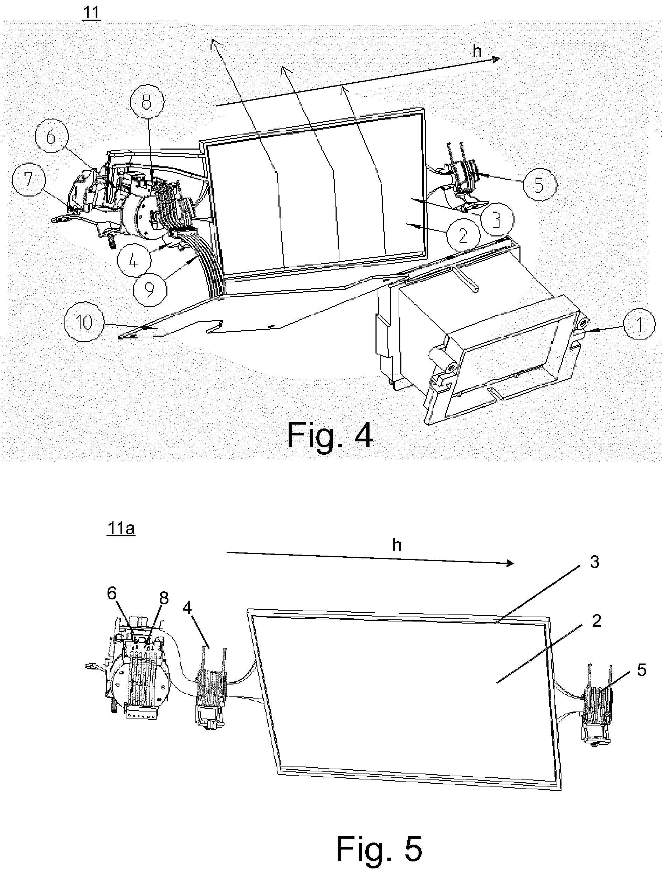

FIG 4 shows the reflection unit 12 (FIG 1) and the gearing system from another angle. In the head-up display 11 device a stable rotation of the first reflection unit 12 (FIG 1) can be achieved. Also, a shaking of the virtual image produced on the windshield 14 (FIG 1) can be prevented. The customer can be supplied with a clean and distinct image which is free from shaking. When rotating the small mirror 2 of the first reflection unit 12 (FIG 1) and fix the aspherical big mirror of the second reflection unit 13 (FIG 1), this one will not be so sensitive to the vibration shocks and the overall resonance frequency of the head-up display device 11 will change. The head-up display device 11 fulfils the customer requirements, pass the vibration test and have a better overall behaviour in tough conditions. The rotation of the first reflection unit 12 (FIG 1) solves the vibration issue of the big mirror of the second reflection unit 13 (FIG 1) . The virtual image projected by a head-up display device 1 can therefore be adjusted with the height of the driver in order to be in the eyes field of view. The head-up display 11 offers a wide range of rotation of the first reflection unit 12 (FIG 1).

FIG 5 shows a second embodiment of the head-up display device 11a. In this embodiment the guide arm is fixed itself in the loose bearing 4 and the fixed bearing 5. The guide arm can be easily inserted into the bearings and need only to be fixed to the bearings. It is not necessary to provide a separate bearing arm.

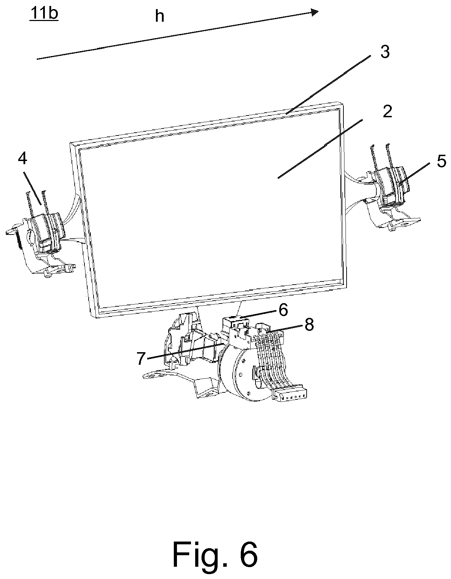

FIG 6 shows a third embodiment of a head-up display device 11b. Here the gearing system is arranged underneath the first reflection unit 12 (FIG 1) in the lower middle position of the cover 3. By this the gearing system is better fixed and the vibrations can be better absorbed.

This embodiment works like the other variants.

## Claims

1. A head-up display device (11, 11a, 11b) for a vehicle comprising:
an image output device (1) configured to output an image,
an optical system that projects the image outputted from the image output device to a windshield (14) of the vehicle in order to display a virtual image within the vehicle, wherein the optical system includes:
a first reflection unit (12) receiving the image outputted from the image output device (1) and reflecting the received image, the first reflection unit (12) having a first optical path, along which the image reflected by the first reflection unit (12) travels; and
a second reflection unit (13) receiving the image reflected by the first reflection unit (12) and projecting the received image to the windshield (14) by reflecting the received image, the second reflection unit (13) having a second optical path, along which the image reflected by the second reflection unit (13) travels;
a gearing system, wherein the gearing system comprises an electric motor (7) and a worm gear, which is rotated by the electric motor (7),
**characterised in that**
the first reflection unit (12) is connected to the gearing system for rotating the first reflection unit (12) within a predetermined rotation angle in order to change the optical path of the reflection reflected by the first reflection unit (12) relative to the second reflection unit (13), by connecting the first reflection unit (12) to a guide arm and the guide arm to the gearing system, for adjusting the rotational position of the first reflection unit (12), and wherein
the second reflection unit (13) is fixed in the head-up display device (11, 11a, 11b).

2. The head-up display device (11, 11a, 11b) according to claim 1, wherein the first reflection unit (12) comprises a mirror (2) disposed in a frame or a back cover (3).

3. The head-up display (11, 11a, 11b) device according to claim 2, wherein a first and a second arm is, preferably in a horizontal direction (h), connected to the frame or the back cover (3).

4. The head-up display device (11, 11a, 11b) according to claim 3, wherein the head-up display device (11, 11a, 11b) comprises a first bearing and a second bearing and wherein the first arm is fixed to the first bearing and the second arm is fixed to the second bearing.

5. The head-up display device (11a) according to claim 4, wherein the first bearing is a loose bearing and the second bearing is a fixed bearing or viceversa.

6. The head-up display device (11, 11b) according to claim 5, wherein the guide arm is connected to a bearing arm and wherein the bearing arm is fixed in the first bearing and in the second bearing.

7. The head-up display device (11a) according to claim 5, wherein the guide arm is fixed in the first bearing and in the second bearing.

8. The head-up display device (11, 11a, 11b) according to one of the claims 4 to 7, wherein the gearing system is located next to the first bearing or the second bearing.

9. The head-up display device (11, 11a , 11b) according to one of the claims 1 to 7, wherein the gearing system is arranged underneath the first reflection unit (12).

10. The head-up display device (11, 11a, 11b) according to one of the claims 1 to 9, wherein the worm gear comprises a worm shaft and wherein the guide arm meshes with the worm shaft.

11. The head-up display device (11, 11a, 11b) according to one of the claims 1 to 9, wherein the gearing system comprises a worm shaft and a worm wheel, wherein the worm wheel meshes with the worm shaft, and wherein the worm wheel is in connection with the guide arm.

12. A head-up display device (11, 11a, 11b) according to one of the claims 1 to 9, wherein the gearing system comprises a motor holder (6) and wherein the guide arm is fixed in the motor holder (6) .

13. A head-up display device (11, 11a, 11b) according to one of the claims 1 to 12, wherein the electric motor (7) is controlled by a mini printed circuit board (8).

14. The head-up display device (11, 11a , 11b) according to claim 13, wherein the mini printed circuit board (8) is connected by a flex cable (9) to a main printed circuit board (10).

15. The head-up display device (11, 11a, 11b) to one of the claims 1 to 14, wherein the worm gear is selected as a function of the distance to the electric motor (7).

16. Vehicle with a head-up display device (11, 11a, 11b) according to one of the preceding claims.
